# EUROPEAN PATENT SPECIFICATION

(11) **EP 4 025 321 B1**
(45) Date of publication and mention of the grant of the patent: **28.06.2023**
(21) Application number: 20771483.3
(22) Date of filing: 03.09.2020
(51) Int. Cl.: F01P 11/08, F16N 13/10, B01D 19/00, B04C 3/06, F16N 39/00, F01P 11/02, B04C 5/081, B04C 5/14

(54) **BUBBLE SEPARATOR, AND FLUID CIRCUIT INCLUDING BUBBLE SEPARATOR FOR AUTOMOBILE**
BLASENSEPARATOR UND FLÜSSIGKEITSKREISLAUF MIT BLASENSEPARATOR FÜR EIN KRAFTFAHRZEUG
SÉPARATEUR DE BULLES, ET CIRCUIT DE FLUIDE COMPRENANT UN SÉPARATEUR DE BULLES POUR AUTOMOBILE

(30) Priority: 03.09.2019 JP 2019160119; 25.12.2019 JP 2019235227
(43) Date of publication of application: 13.07.2022
(73) Proprietor: MAHLE Filter Systems Japan Corporation, Tokyo 170-0004 (JP); MAHLE International GmbH, 70376 Stuttgart (DE)
(72) Inventor: ENDO, Joshikazu, Tokyo 170-0004 (JP); KOBAYASHI, Hirotaka, Tokyo 170-0004 (JP)
(74) Representative: BRP Renaud & Partner mbB Rechtsanwälte Patentanwälte Steuerberater
(86) International application number: PCT/EP2020/074548
(87) International publication number: WO 2021/043876

(56) References cited:
- EP-A1- 1 669 119
- DE-A1- 4 203 948
- DE-U1- 29 908 479
- US-A- 2 816 490
- US-A- 4 216 095
- US-A- 4 795 561
- US-B1- 6 348 087

## Description

### [Technical Field]

The present invention relates to a bubble separator that separates bubbles contained in liquid by a centrifugal force, and also to a fluid circuit for an automobile including the bubble separator.

### [Background Art]

Conventionally, a motor cooling system that includes a fluid circuit and is for cooling a motor shaft, coil ends and the like, using lubricating oil at a variable speed gear or a differential gear, or ATF in a transmission, is adopted in a motor whose output power density is relatively high, such as a motor for driving adopted in an electric automobile or an electric train (e.g., see Patent Literature 1).

### [Citation List]

### [Patent Literature]

[Patent Literature 1]
Japanese Patent Laid-Open No. 09-226394
US 6,348,087 B1 discloses a cyclonic separator for separating a mixture containing three phases of matter. The separator comprises an upper chamber, a lower chamber and an outlet chamber in fluid connection with each other. The separator further comprises tangential fluid inlets and outlets.
EP 1 669 119 A1 discloses a cyclonic fluid separator for separating liquid, gas and solid components of a mixture. An inlet for receiving the mixture opens tangentially into a separation chamber.
US 2,816,490 A shows an apparatus for the treatment of liquids for separation of solid particles and gases. The apparatus has a chamber, wherein at an end of the chamber an intake pipe is connected to the chamber. At the other end of the chamber, is arranged an axially positioned gas outlet pipe. Another gas outlet is connected to a core. Both outlets are connected to a vacuum pump.
DE 299 08 479 U1 disclosed a cyclone dust collector. The collector has a bottom through which a tube is fed and through which a swirl is fixed.

### [Summary of Invention]

### [Technical Problem]

In the motor cooling system that includes the fluid circuit as described above, many bubbles are generated in oil owing to oil stirred up by gears or injection of oil to a motor shaft or coil ends. As the amount of bubbles in oil increases, the actual flow rate of oil pressure-fed by a pump to a motor to be cooled decreases. Accordingly, a problem occurs in that the cooling efficiency of the motor decreases. Furthermore, noise due to crushing bubbles occurs and when ATF is used as cooling oil, a problem also occurs in that the speed change efficiency decreases according to degradation in hydraulic responsiveness in the transmission.

The present invention has been made in view of the problems described above, and has an object to provide a bubble separator that efficiently removes bubbles contained in liquid, and a fluid circuit for an automobile with a cooling efficiency being improved by the use of such a bubble separator.

### [Solution to Problem]

To solve the problems described above, according to the present invention, a bubble separator used for a fluid circuit for an automobile and separating bubbles in liquid is provided, the bubble separator comprising: a swirl flow formation part that includes a columnar-shaped internal space; a flow inlet disposed at one end of the swirl flow formation part, the flow inlet opening so as to cause the liquid to flow in in a tangential direction of an inner peripheral surface of the swirl flow formation part to form a swirl flow on the inner peripheral surface; a flow outlet disposed at another end of the swirl flow formation part, the flow outlet opening so as to cause the liquid to flow out in the tangential direction from the inner peripheral surface; and gas discharge ports that discharge gas separated from the liquid at the swirl flow formation part, to an outside of the swirl flow formation part, wherein the gas discharge ports are respectively provided at both ends of the swirl flow formation part.

According to this, while the liquid is swirled in the swirl flow formation part, the bubbles contained in the liquid are separated by the centrifugal force, and the separated gas is discharged from the gas discharge ports provided at both ends of the swirl flow formation part. Accordingly, deaeration from the liquid can be efficiently performed.

The bubble separator further comprises a tubular gas column promotion part that extends coaxially with the swirl flow formation part in the swirl flow formation part. According to this, in the swirl flow formation part, formation of a gas column made of gas separated from the liquid is promoted. Accordingly, mixing of the gas once separated from the liquid into the liquid again decreases. Consequently, the deaeration efficiency can be further improved.

An end of the gas column promotion part may penetrate through the gas discharge port on the end surface of the swirl flow formation part. According to this, both promotion of forming the gas column and discharge of the gas can be performed in an integrated structure.

When an inside diameter of the flow inlet is d₁, an inside diameter D of the swirl flow formation part ranges from 1.5d₁ to 3d₁ according to the invention. According to this, a space where the gas column made of the gas separated from the liquid resides is sufficiently secured in the swirl flow formation part, thereby high deaeration efficiency can be achieved.

When an inside diameter of the flow outlet is d₂, a height 1 of a portion of the gas column promotion part that protrudes in the swirl flow formation part may be equal to or larger than 2d₂. This can maintain the gas column in the swirl flow formation part.

According to another embodiment of the present invention, a viscous fluid circuit for an automobile is provided, the viscous fluid circuit comprising: an oil pan; a pump that delivers oil from the oil pan; a bubble separator according to the invention, as described above, that separates bubbles from the oil delivered from the pump; and a motor to be cooled by the oil from which the bubbles have been separated by the bubble separator, wherein the bubble separator is configured to cause a swirl flow inside the bubble separator by a discharge pressure of the pump.

According to this, the bubbles contained in the liquid are efficiently removed by the bubble separator. Consequently, reduction of the cooling efficiency of the motor can be prevented. Furthermore, reduction in noise caused by bubbles, and improvement in hydraulic responsiveness can be expected.

The oil may be lubricating oil or automatic transmission fluid for an automobile, or a coolant of a cooling system or the cooler.

### [Advantageous Effects of Invention]

According to the present invention, while the liquid is swirled in the swirl flow formation part, the gas contained in the liquid is separated by the centrifugal force, and the separated gas is discharged from the gas discharge ports provided on the both ends of the swirl flow formation part. Accordingly, deaeration from the liquid can be efficiently performed.

### [Brief Description of Drawings]

Figure 1 is a schematic diagram of a motor cooling system.
Figure 2 is a detailed diagram of a bubble separator.
Figures 3(a) and 3(b) illustrate the flow of liquid in the bubble separator.
Figure 4 is a contour diagram showing a state of separation between liquid and gas in the bubble separator.
Figure 5 is a graph showing the difference in deaeration efficiency according to presence or absence of a gas column promotor.
Figure 6 is a graph showing the relationship between the inside diameter and the deaeration efficiency of a swirl flow formation part.
Figure 7 is a graph showing the relationship between the length of a protruding part of the gas column promotor and the deaeration efficiency.
Figure 8 is a graph showing the relationship between the temperature and the deaeration efficiency in the bubble separator.
Figure 9 shows an oil pump that includes a bubble separator according to the present invention.
Figure 10 shows an oil cooler that includes a bubble separator according to the present invention.
Figure 11 shows an oil cooler that includes a bubble separator according to the present invention.
Figure 12 shows an oil cooler that includes a bubble separator according to the present invention.
Figure 13 shows an oil pan that includes a bubble separator according to the present invention.
Figure 14 shows an oil pan that includes a bubble separator according to the present invention.

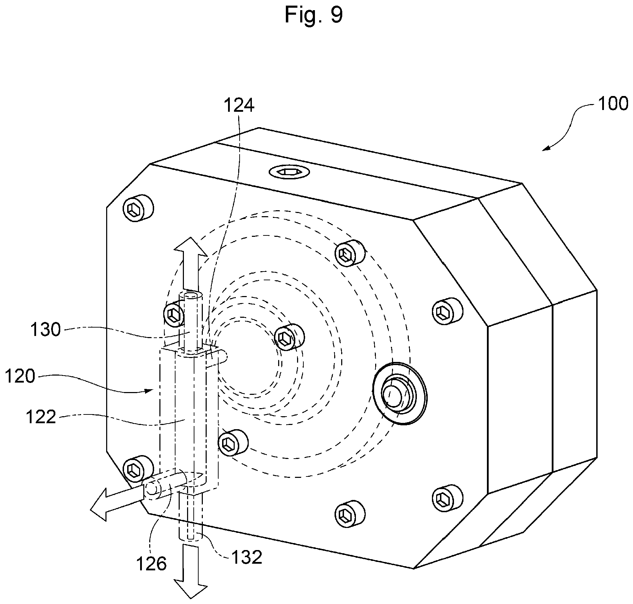

In figures 9, 10, 11, 13 and 14, the tubular gas column promotion part of the invention is not shown.

### [Description of Embodiments]

Hereinafter, an embodiment for implementing the present invention is described with reference to the drawings.

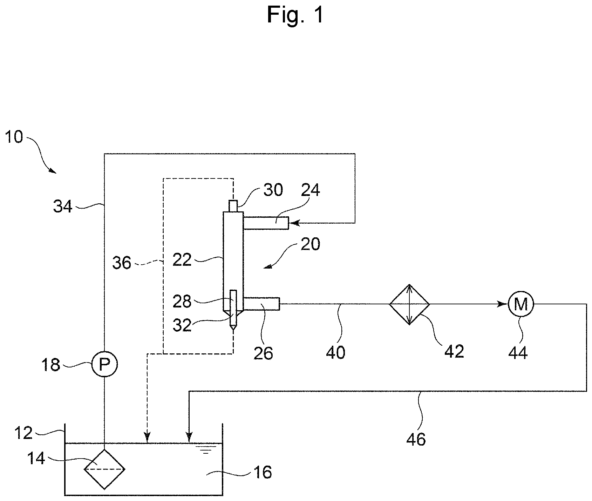

Figure 1 is a schematic circuit diagram of a motor cooling system 10 that includes a fluid circuit provided with a bubble separator according to an embodiment of the present invention. This motor cooling system 10 is assumed to be incorporated in a casing of a planetary gear type gear mechanism having a built-in motor, for example, a reduction gear for an EV. Solid lines 34, 40 and 46 in the diagram indicate the flows of oil that is, for example, ATF (automatic transmission fluid).
However, the flows are schematic ones and are not limited to those flowing through a pipe or the like.

For example, a rotating body, such as a ring gear of a planetary gear type gear mechanism, a differential gear or a clutch, stirs up oil, thereby causing a considerable amount of bubbles to be mixed into the oil. Bubbles are mixed into the oil also by injecting oil to the motor for the sake of cooling. The bubble separator according to the present embodiment is provided for effectively separating bubbles from the oil.

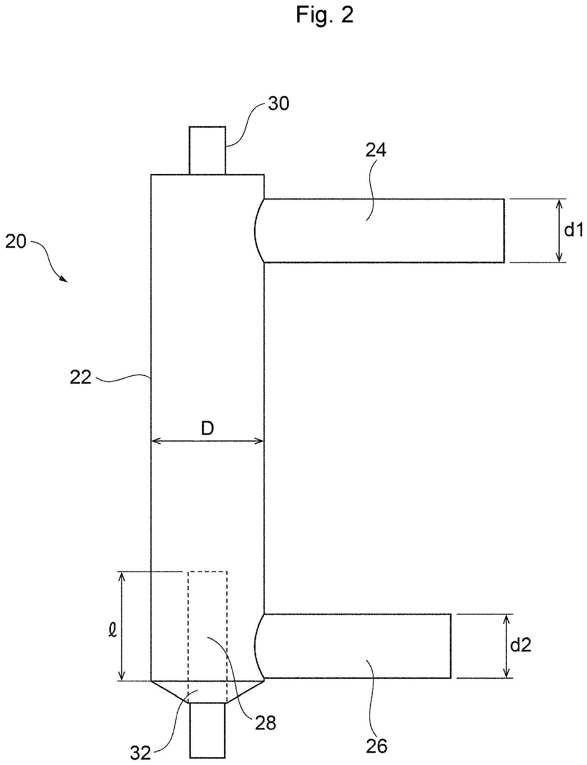

In Figure 1, an oil pan 12 is disposed at the bottom of a casing, not shown, and collects and accumulates oil 16. A pump 18 pumps up the oil 16 in the oil pan 12 through an oil strainer 14, and pressure-feeds the oil into the bubble separator 20 through the path 34. The bubble separator 20 separates the oil and gas from each other, and discharges the oil through the path 40 while discharging the separated gas through a path 36. The bubble separator 20 is described in detail with reference to Figure 2.

The oil discharged from the bubble separator 20 is cooled by a heat exchanger 42, is subsequently dropped onto an element to be cooled of a motor 44 (for example, a coil end) or is pressure-fed to a motor shaft, and cools the element or the motor shaft. The injected oil is collected into the oil pan 12 through the path 46.

Figure 2 is a detailed diagram of the bubble separator 20. The bubble separator 20 includes a cylindrical-shaped swirl flow formation part 22 that extends in the vertical direction. The swirl flow formation part 22 has a built-in columnar-shaped space. In proximity to one end on the upstream side of the swirl flow formation part 22, a tubular flow inlet 24 extending in the horizontal direction is provided. The flow inlet 24 has a role of receiving the oil pressure-fed from the pump 18 and of delivering the oil into the swirl flow formation part 22. The flow inlet 24 opens on the inner peripheral surface at a position causing the oil to flow in the tangential direction of the inner peripheral surface of the swirl flow formation part 22, that is, a position offset from the central axis of the swirl flow formation part 22.

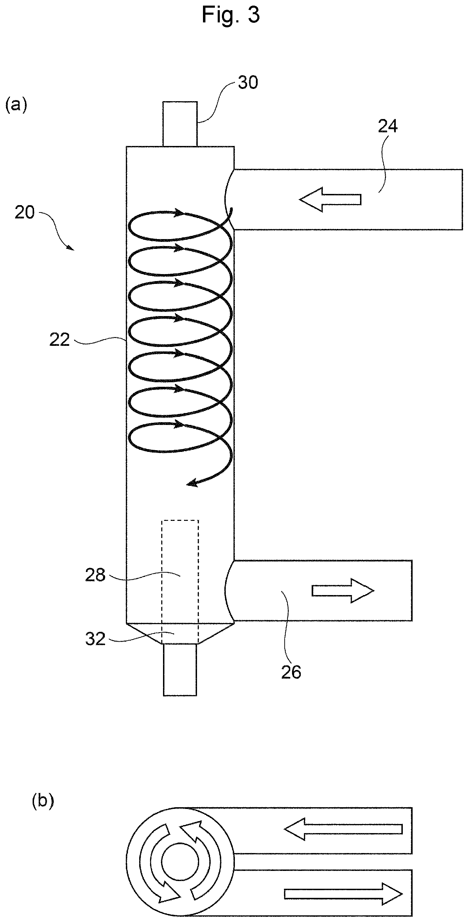

The oil flowing through the flow inlet 24 forms a swirl flow on the inner peripheral surface of the swirl flow formation part 22 owing to its velocity energy. The swirl flow has a centrifugal force of 10 G or higher, for example, and flows downward of the swirl flow formation part 22 while spirally swirling as shown in Figure 3(a). During the swirling, the oil moves toward the outer periphery side and bubbles move toward the inner periphery side owing to the difference of centrifugal forces which the oil and bubbles experience. Accordingly, the oil and the bubbles are separated from each other.

In proximity to another end on the downstream side of the swirl flow formation part 22, a tubular flow outlet 26 extending in the horizontal direction is provided. The flow outlet 26 opens on the inner peripheral surface at a position causing the oil having spirally flown in the swirl flow formation part 22 to flow out in the tangential direction of the inner peripheral surface, that is, a position offset from the central axis of the swirl flow formation part 22.

As shown in the plan view of Figure 3(b), the oil is caused to flow to the inside in the tangential direction of the inner peripheral surface of the swirl flow formation part 22 through the flow inlet 24, and the oil is caused to flow out in the tangential direction of the inner peripheral surface of the swirl flow formation part 22 through the flow outlet 26, thereby minimizing the loss of the kinetic energy of the oil pressure-fed by the pump 18.

Gas separated from the oil is accumulated around the central axis of the swirl flow formation part 22. At the center parts of the upper surface and the lower surface of the swirl flow formation part 22, gas discharge ports 30 and 32 are respectively provided. The gas is discharged through the gas discharge ports 30 and 32 by the difference in pressure between the inside and the outside of the swirl flow formation part 22.

As described above, the gas separated in the swirl flow formation part is discharged through the upper and lower gas discharge ports 30 and 32. At this time, the separated gas is accumulated at the center of the swirl flow formation part 22 and forms a gas column. However, through a test by the inventor of the present application, it has been found that if the lower end of the gas column communicates with the flow outlet 26 instead of the gas discharge port 32, the gas is sucked into the oil again around the flow outlet 26.

Accordingly a gas column promotion part 28 is provided in the swirl flow formation part 22. The gas column promotion part 28 includes a cylindrical shape extending in the vertical direction along the central axis of the swirl flow formation part 22. The lower end of the gas column promotion part 28 extends and penetrates through the gas discharge port 32 on the lower surface of the swirl flow formation part 22.

By providing such a gas column promotion part 28, the lower end of the gas column formed in the swirl flow formation part 22 is introduced to the gas discharge port 32 through the gas column promotion part 28. Accordingly, the gas column is prevented from communicating with the flow outlet 26. Consequently, around the flow outlet 26, mixing of gas into the oil again is suppressed, which can resultantly improve the efficiency of separating bubbles.

In Figures 1 to 3(a) and 3(b), the swirl flow formation part 22 is represented as a cylindrical shape whose inner diameter D is uniform. However, another shape may be adopted as long as the oil pressure-fed from the pump 18 can be swirled along the inner peripheral surface. For example, a funnel-shaped swirl flow formation part whose inner diameter decreases from the upper end to the lower end may be adopted. Even with the use of a swirl flow formation part having a funnel-shaped upper part and a cylindrical-shaped lower part, liquid and gas can be separated from each other.

Furthermore, in Figures 1 to 3(a) and 3(b), in the bubble separator 20, the swirl flow formation part 22 is disposed so as to extend in the vertical direction. However, there is no limitation thereto. As long as a swirl flow having a predetermined centrifugal force can be formed in the swirl flow formation part 22 by pressure-feeding from the pump, the bubble separator 20 may be disposed such that the swirl flow formation part 22 extends in the horizontal direction, or be disposed such that the swirl flow formation part 22 is inclined.

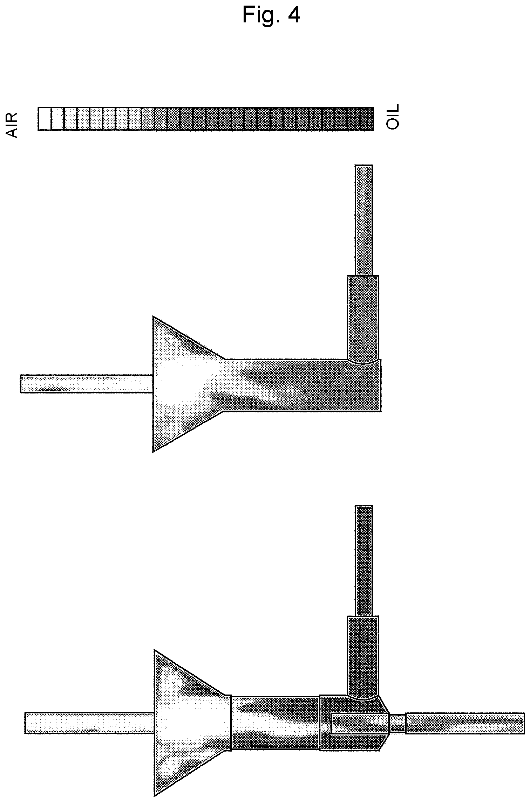

Figure 4 is a gas-liquid contour diagram of the degree of separation of bubbles according to presence or absence of the gas column promotion part, the degree having been obtained by CAE (Computer Aided Engineering). The right diagram shows a result in a case where the gas column promotion part is not provided, and the left diagram shows a result in a case where the gas column promotion part is provided. It is represented that the thinner the color is, the higher the ratio of the air is, and the thicker the color is, the higher the ratio of the oil is. Note that here, a result of the bubble separator is shown having a funnel-shaped upper part instead of a cylindrical-shaped bubble separator.

The right diagram where the gas column promotion part does not exist shows that air is separated from the oil at the upper part of the swirl flow formation part, but a distinct gas column is not formed, and separation of the air from the oil is not sufficient specifically around the flow outlet.

Meanwhile, the left diagram where the gas column promotion part exists shows that a distinct gas column is formed at the center of the swirl flow formation part, and separated air is discharged through the upper and lower gas discharge ports. It also shows that little air is contained in the oil flowing out through the flow outlet.

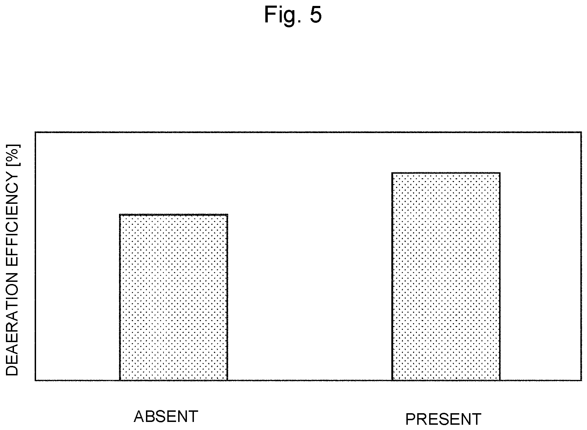

Figure 5 is a graph of the deaeration efficiency according to presence or absence of the gas column promotion part, that is, the ratio of air successfully separated from liquid that contains bubbles, the ratio having been obtained by CAE. This shows that by providing the gas column promotion part, the deaeration efficiency increases by about 20%.

The deaeration efficiency is changed also by other conditions. Hereinafter, results of CAE that identifies changes in deaeration efficiency in some conditions are described.

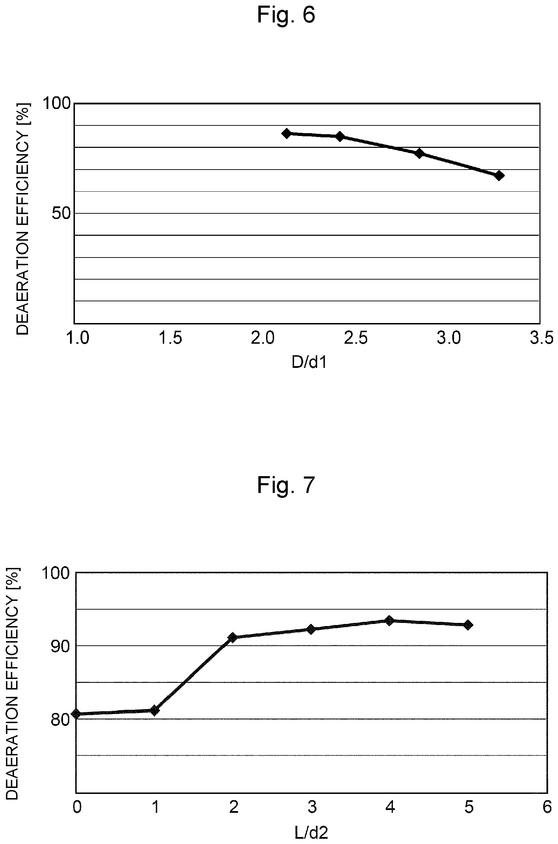

Figure 6 is a graph of the relationship between the ratio between the inside diameter D of the swirl flow formation part 22 and the inside diameter d₁ of the flow inlet 24 and the deaeration efficiency, the relationship having been obtained by CAE. As can be seen from Figure 6, as the inside diameter D of the swirl flow formation part is increased, the deaeration efficiency decreases. This is because if the inside diameter D of the swirl flow formation part is increased, the flow velocity of the swirl flow flowing on the inner peripheral surface is reduced by increase in the sectional area of the swirl flow formation part, the centrifugal force applied to the oil decreases, and the amount of air separated from the oil decreases accordingly. If the inside diameter D is excessively reduced, the pressure loss increases.

According to the above discussion, the inventors of the present application have found that if the inside diameter of the swirl flow formation part ranges from D = 1.5d₁ to 3d₁, the deaeration efficiency is maximized.

Figure 7 is a graph of the relationship between the height of the gas column promotion part and the deaeration efficiency, the relationship having been obtained by CAE. The horizontal axis of the graph represents the ratio between the height I of a part of the gas column promotion part protruding in the swirl flow formation part and the inside diameter d₂ of the flow outlet. The vertical axis represents the deaeration efficiency. As can be seen from Figure 7, it is found that if l/d₂ is two or more, that is, l is equal to or more than 2d₂, the deaeration efficiency is improved.

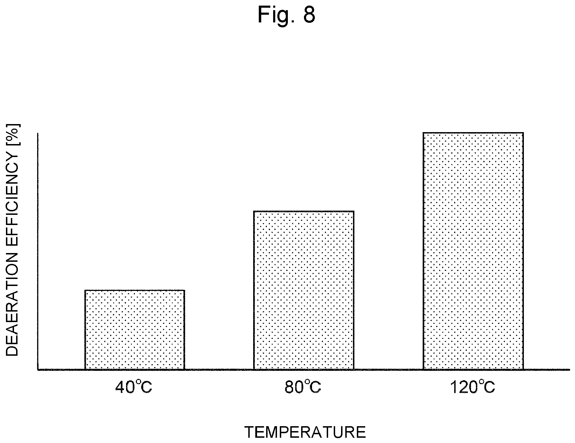

CAE has revealed that the deaeration efficiency varies also by the temperature of the oil in the bubble separator. Figure 8 is a graph illustrating this. The horizontal axis indicates the oil temperature in the bubble separator, and the ordinate axis represents the deaeration efficiency.

According to CAE, a deaeration efficiency was about 50% at an oil temperature of 40°C with a mass flow rate of oil pressure-fed by the pump being 7 kg/s. As the oil temperature increased, the deaeration efficiency was improved. For example, at an oil temperature of 80°C, the deaeration efficiency was about 60%. At an oil temperature of 120°C, the deaeration efficiency increased to about 90%.

Furthermore, the bubbles separated from the oil obeys the Boyle-Charles's law represented as PV = nRT at a constant temperature. At a low pressure, the diameters of bubbles are large. At a high pressure, the diameters of bubbles are small. The diameter of a bubble and the buoyancy has a proportional relation. The larger the diameters of bubbles are, the larger the effect of the centrifugal force is. Accordingly, separation from the oil is easy. Consequently, it is preferable to perform centrifugal separation between the oil and bubbles in a low-pressure environment.

As described above, according to the present embodiment, the bubbles contained in the oil pressure-fed by the pump can be efficiently removed.

By removal of the bubbles, the cooling efficiency of the motor, to which the oil is dropped or pressure-fed, can be improved. Furthermore, by removal of the bubbles, suppression of noise generated when bubbles are crushed, and improvement in hydraulic responsiveness can be expected.

The bubble separator according to the present embodiment can be significantly compact, and thus can be easily incorporated in an existing motor cooling system including a fluid circuit. As the bubble separator performs gas-liquid separation using oil pressure-fed by a pump which is naturally provided in an existing motor cooling system, it does not require another element for its operation. Consequently, without need to largely change the design of the system, the bubble separator can be fit into a casing of a transmission, for example.

In the above description, use of the bubble separator in the motor cooling system including the fluid circuit incorporated in the transmission has been described. The bubble separator according to the present invention can be incorporated in any apparatus or system that has need to separate bubbles contained in liquid. For example, the bubble separator according to the present invention can be applied also to separation of bubbles contained in engine oil. In a case where the bubble separator is incorporated in an apparatus, the swirl flow formation part is not necessarily an independent component as long as this includes an internal space having a columnar shape. For example, a columnar-shaped internal space preliminarily formed in a casing of an apparatus may be used as the swirl flow formation part.

Liquid serving as a target of gas-liquid separation is not limited to viscous fluid, such as ATF and lubricating oil. For example, the liquid may be a coolant for a cooler or a cooling system. Likewise, gas to be separated is not limited to air.

Hereinafter, some examples of an apparatus in which a bubble separator according to the present invention is incorporated are described.

Figure 9 is a schematic perspective view of an oil pump 100 that includes a bubble separator 120 according to the present invention. The bubble separator 120 is built into the housing of the oil pump 100. A flow inlet 124 of the bubble separator 120 communicates directly with a pump chamber of the oil pump 100, and oil discharged from the pump chamber passes through the flow inlet 124 and flows into a swirl flow formation part 122. The oil from which bubbles have been separated in the swirl flow formation part 122 flows out from the flow outlet 126, while the gas is discharged from the gas discharge ports 130 and 132.

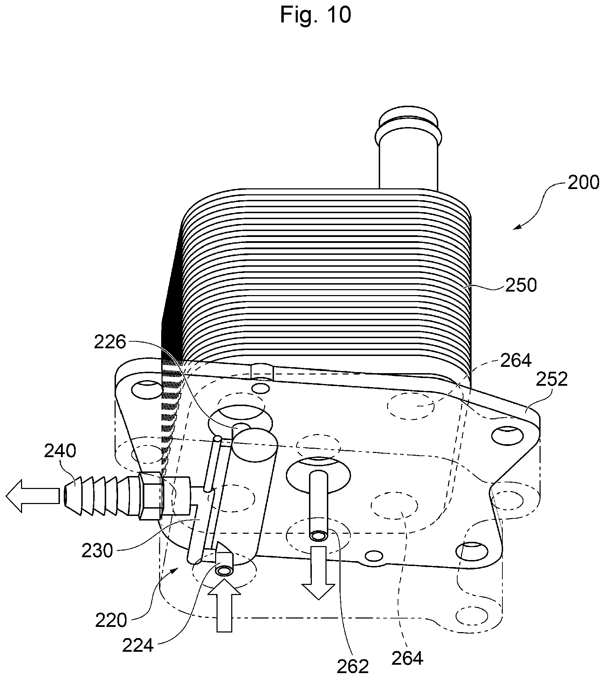

Figure 10 is a perspective view of an oil cooler 200 that includes a bubble separator 220 according to the present invention. The oil cooler 200 includes a core part 250 formed by alternately stacking plates and fins, and a base plate 252, and is provided with one center port 262 and four paths 264 that penetrate in the vertical direction through the core part 250 and the base plate 252. The bubble separator 220 is built into the base plate 252. Oil is pressure-fed from a pump, not shown, to a flow inlet 224, and the oil and bubbles are separated from each other in a swirl flow formation part 222. The deaerated oil flows out from a flow outlet 226, is guided through one path 264 of the oil cooler 200, and is cooled by heat exchange with a coolant in the core part 250. Flow paths extending from gas discharge ports at both ends of the swirl flow formation part 222 are integrated into one flow path 240.

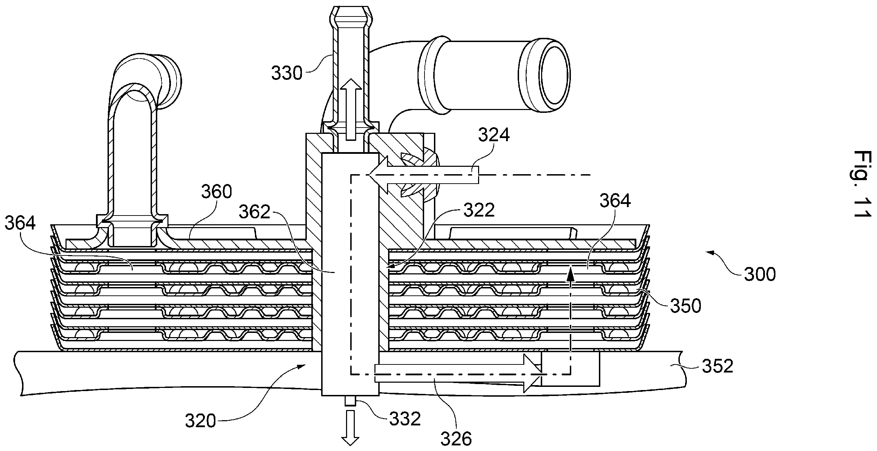

Figure 11 is a sectional view of an oil cooler 300 that includes a bubble separator 320 according to the present invention. The oil cooler 300 includes: a core part 350 formed by alternately stacking plates and fins; a base plate 352 disposed below the core part 350; and an upper plate 360 that covers an upper part of the core part 350. The upper plate 360 is formed integrally with a center port 362 that penetrates through the core part 350. Furthermore, a columnar-shaped internal space is formed by the center port 362 and a concave formed in the base plate 352. The internal space is used as a swirl flow formation part 322 of the bubble separator 320. Oil is pressure-fed from a pump, not shown, to a flow inlet 324, and the oil and bubbles are separated from each other in the swirl flow formation part 322. The deaerated oil passes through a flow outlet 326 formed in the base plate 352, flows out to a path 364 that penetrates in the vertical direction through the core part 350, and is cooled by heat exchange with a coolant in the core part 350. The gas separated in the swirl flow formation part 322 is discharged from the gas discharge ports 330 and 332.

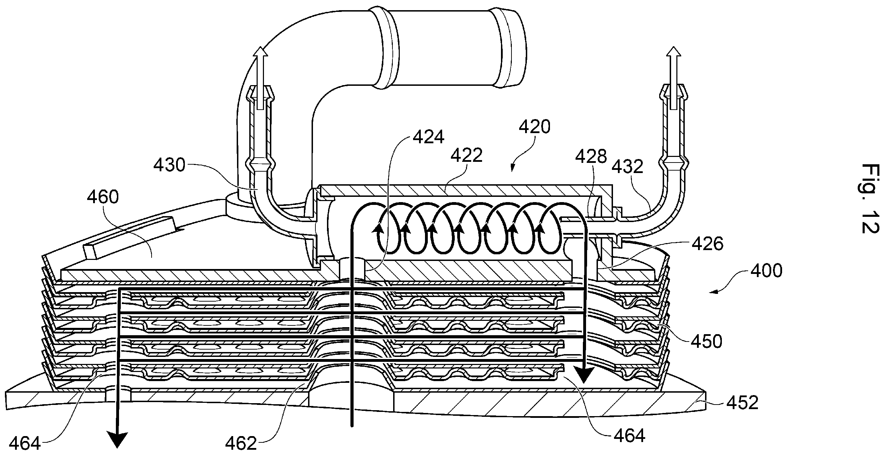

Figure 12 is a sectional perspective view of an oil cooler 400 that includes a bubble separator 420 according to the present invention. The oil cooler 400 includes: a core part 450 formed by alternately stacking plates and fins; a base plate 452 disposed below the core part 450; and an upper plate 460 that covers an upper part of the core part 450. In this example, a swirl flow formation part 422 of the bubble separator 420 is fixed integrally with the upper plate 460. Oil from the center port 462 passes through a flow inlet 424 and is guided to the swirl flow formation part 422, and the oil and bubbles are separated from each other in the swirl flow formation part 422. The deaerated oil flows out from a flow outlet 426 to a path 464 that penetrates in the vertical direction through the core part 450, flows through the path in the core part 450 as indicated by an arrow in the figure, while being cooled with heat exchange with a coolant. The gas separated in the swirl flow formation part 422 is discharged from the gas discharge ports 430 and 432.

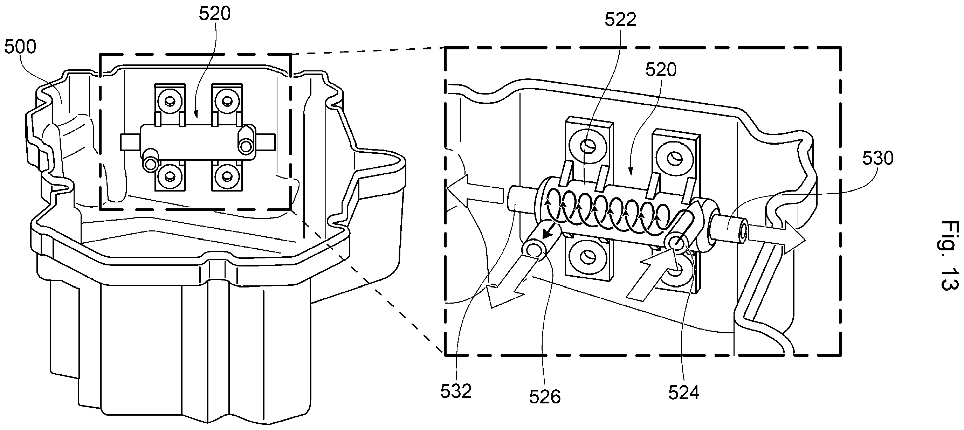

Figure 13 is a perspective view of an oil pan 500 that includes a bubble separator 520 according to the present invention. In this example, the bubble separator 520 is attached to an inner wall surface of the oil pan 500. Oil is pressure-fed from a pump, not shown, to a flow inlet 524, and the oil and bubbles are separated from each other in a swirl flow formation part 522. The deaerated oil flows out from a flow outlet 526, and is guided to a cooling target, not shown. Gas discharge ports 530 and 532 open in the oil pan 500, and are configured to allow gas separated from the oil to be returned into the oil pan 500.

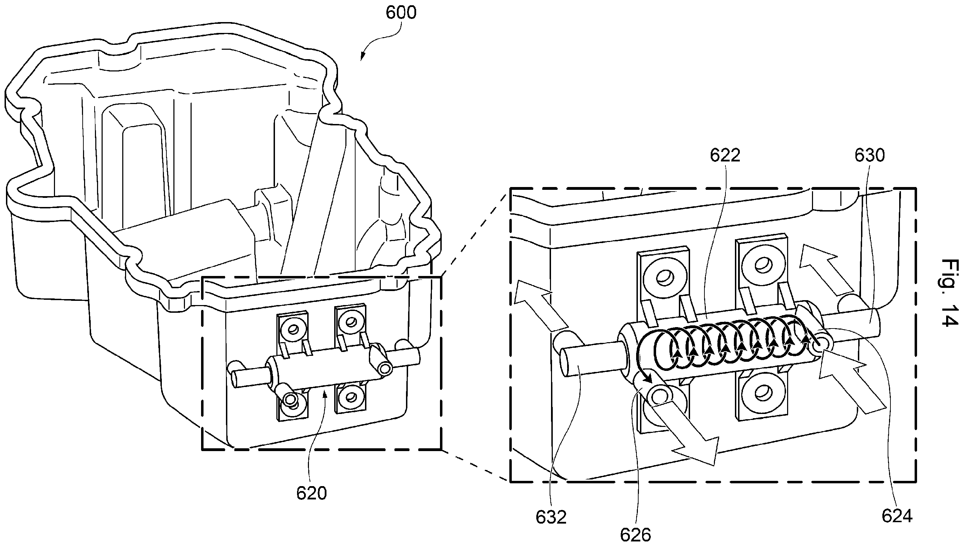

Figure 14 is a perspective view of an oil pan 600 that includes a bubble separator 620 according to the present invention. In this example, the bubble separator 620 is attached to an outer wall surface of the oil pan 600. Oil is pressure-fed from a pump, not shown, to a flow inlet 624, and the oil and bubbles are separated from each other in a swirl flow formation part 622. The deaerated oil flows out from a flow outlet 626, and is guided to a cooling target, not shown. Gas discharge ports 630 and 632 communicate with the inside of the oil pan 600, and are configured to allow the gas separated from the oil to pass through gas discharge ports 630 and 632 and be returned into the oil pan 600.

Some embodiments of the present invention have thus been described above. However, the present invention is not limited to these embodiments, and can be subjected to various modifications and improvements within the range of the present invention described in the claims.

### [Reference Signs List]

10 Motor cooling system
12 Oil pan
14 Oil strainer
16 Oil
18 Pump
20,120,220,320,420,520,620 Bubble separator
22,122,222,322,422,522,622 Swirl flow formation part
24,124,224,324,424,524,624 Flow inlet
26,126,226,326,426,526,626 Flow outlet
28,428 Gas column promotion part
30,130,230,330,430,530,630 Gas discharge port
32,132,232,332,432,532,632 Gas discharge port
42 Heat exchanger
44 Motor
100 Oil pump
200,300,400 Oil cooler
500,600 oil pan

## Claims

1. A bubble separator (20, 120, 220, 320, 420, 520, 620) used for a fluid circuit for an automobile and separating bubbles in liquid, comprising:
a swirl flow formation part (22, 122, 222, 322, 422, 522, 622) that includes a columnar-shaped internal space;
a flow inlet (24, 124, 224, 324, 424, 524, 624) disposed at one end of the swirl flow formation part (22, 122, 222, 322, 422, 522, 622), the flow inlet (24, 124, 224, 324, 424, 524, 624) opening so as to cause the liquid to flow in in a tangential direction of an inner peripheral surface of the swirl flow formation part (22, 122, 222, 322, 422, 522, 622) to form a swirl flow on the inner peripheral surface;
a flow outlet (26, 126, 226, 326, 426, 526, 626) disposed at another end of the swirl flow formation part (22, 122, 222, 322, 422, 522, 622), the flow outlet 26,126,226,326,426,526,626) opening so as to cause the liquid to flow out in the tangential direction from the inner peripheral surface; and
gas discharge ports (30, 130, 230, 330, 430, 530, 630, 32, 132, 232, 332, 432, 532, 632) that discharge gas separated from the liquid at the swirl flow formation part (22, 122, 222, 322, 422, 522, 622) to an outside of the swirl flow formation part (22, 122, 222, 322, 422, 522, 622),
wherein the gas discharge ports (30, 130, 230, 330, 430, 530, 630, 32, 132, 232, 332, 432, 532, 632) are respectively provided at both ends of the swirl flow formation part (22, 122, 222, 322, 422, 522, 622),
wherein the bubble separator (20, 120, 220, 320, 420, 520, 620) comprises a tubular gas column promotion part (28, 428) that extends coaxially with the swirl flow formation part (22, 122, 222, 322, 422, 522, 622) in the swirl flow formation part (22, 122, 222, 322, 422, 522, 622)
**characterized in that**, when an inner diameter of the flow inlet (24, 124, 224, 324, 424, 524, 624) is d₁, an inner diameter D of the swirl flow formation part (22, 122, 222, 322, 422, 522, 622) ranges from 1.5d₁ to 3d₁.

2. The bubble separator according to claim 1, wherein one end of the gas column promotion part (28, 428) penetrates through the gas discharge port (30, 130, 230, 330, 430, 530, 630, 32, 132, 232, 332, 432, 532, 632) on an end surface of the swirl flow formation part (22, 122, 222, 322, 422, 522, 622).

3. The bubble separator according to claim 1 or 2, wherein when an inner diameter of the flow outlet (26, 126, 226, 326, 426, 526, 626) is d₂, a height l of a portion of the gas column promotion part (28, 428) that protrudes in the swirl flow formation part (22, 122, 222, 322, 422, 522, 622) is equal to or larger than 2d₂.

4. The bubble separator according to any one of claims 1 to 3, wherein the liquid is a coolant of a cooler or a cooling system.

5. A viscous fluid circuit for an automobile, comprising:
an oil pan (500, 600);
a pump (100) that delivers oil from the oil pan (500, 600);
a bubble separator (20, 120, 220, 320, 420, 520, 620) according to any of claims 1 to 3 that separates bubbles from the oil delivered from the pump (100); and
a motor (44) to be cooled by the oil from which the bubbles have been separated by the bubble separator (20, 120, 220, 320, 420, 520, 620),
wherein the bubble separator (20, 120, 220, 320, 420, 520, 620) is configured to cause a swirl flow inside the bubble separator (20, 120, 220, 320, 420, 520, 620) by a discharge pressure of the pump (100).

6. The viscous fluid circuit for an automobile according to claim 5, wherein the oil is lubricating oil or automatic transmission fluid.

## Patentansprüche

1. Blasenabscheider (20, 120, 220, 320, 420, 520, 620), der für einen Fluidkreislauf für ein Kraftfahrzeug verwendet wird und Blasen in Flüssigkeit abscheidet, umfassend:
einen Drallströmungsbildungsteil (22, 122, 222, 322, 422,522, 622), der einen säulenförmigen Innenraum einschließt;
einen Strömungseinlass (24, 124, 224, 324, 424, 524, 624), der an einem Ende des Drallströmungsbildungsteils (22, 122, 222, 322, 422, 522, 622) angeordnet ist, wobei sich der Strömungseinlass (24, 124, 224, 324, 424, 524, 624) öffnet, sodass bewirkt wird, dass die Flüssigkeit in einer tangentialen Richtung einer inneren Umfangsfläche des Drallströmungsbildungsteils (22, 122, 222, 322, 422, 522, 622) einströmt, um eine Drallströmung an der inneren Umfangsfläche zu bilden;
einen Strömungsauslass (26, 126, 226, 326, 426, 526, 626), der an einem anderen Ende des Drallströmungsbildungsteils (22, 122, 222, 322, 422, 522, 622) angeordnet ist, wobei sich der Strömungsauslass (26, 126, 226, 326, 426, 526, 626) öffnet, sodass bewirkt wird, dass die Flüssigkeit in der tangentialen Richtung von der inneren Umfangsfläche ausströmt; und
Gasabführöffnungen (30, 130, 230, 330, 430, 530, 630, 32, 132, 232, 332, 432, 532, 632), die von der Flüssigkeit am Drallströmungsbildungsteil (22, 122, 222, 322, 422, 522, 622) abgeschiedenes Gas zu einer Außenseite des Drallströmungsbildungsteils (22, 122, 222, 322, 422, 522, 622) abführen,
wobei die Gasabführöffnungen (30, 130, 230, 330, 430, 530, 630, 32, 132, 232, 332, 432, 532, 632) jeweils an beiden Enden des Drallströmungsbildungsteils (22, 122, 222, 322, 422, 522, 622) bereitgestellt sind,
wobei der Blasenabscheider (20, 120, 220, 320, 420, 520, 620) einen rohrförmigen Gassäulenförderungsteil (28, 428) umfasst, der sich koaxial zum Drallströmungsbildungsteil (22, 122, 222, 322, 422, 522, 622) in den Drallströmungsbildungsteil (22, 122, 222, 322, 422, 522, 622) erstreckt,
**dadurch gekennzeichnet, dass**, wenn ein Innendurchmesser des Strömungseinlasses (24, 124, 224, 324, 424, 524, 624) d₁ ist, ein Innendurchmesser D des Drallströmungsbildungsteils (22, 122, 222, 322, 422, 522, 622) von 1,5d₁ bis 3d₁reicht.

2. Blasenabscheider nach Anspruch 1, wobei ein Ende des Gassäulenförderungsteils (28, 428) die Gasabführöffnung (30, 130, 230, 330, 430, 530, 630, 32, 132, 232, 332, 432, 532, 632) an einer Endfläche des Drallströmungsbildungsteils (22, 122, 222, 322, 422, 522, 622) durchdringt.

3. Blasenabscheider nach Anspruch 1 oder 2, wobei, wenn ein Innendurchmesser des Strömungsauslasses (26, 126, 226, 326, 426, 526, 626) d₂ ist, eine Höhe I eines Abschnitts des Gassäulenförderungsteils (28, 428), der im Drallströmungsbildungsteil (22, 122, 222, 322, 422, 522, 622) vorragt, gleich oder größer als 2d₂ ist.

4. Blasenabscheider nach einem der Ansprüche 1 bis 3, wobei die Flüssigkeit ein Kühlmittel eines Kühlers oder eines Kühlsystems ist.

5. Kreislauf eines viskosen Fluids für ein Kraftfahrzeug, umfassend:
eine Ölwanne (500, 600);
eine Pumpe (100), die Öl aus der Ölwanne (500, 600) fördert;
einen Blasenabscheider (20, 120, 220, 320, 420, 520, 620) nach einem der Ansprüche 1 bis 3, der Blasen aus dem von der Pumpe (100) geförderten Öl abscheidet; und
einen Motor (44), der durch das Öl, aus dem die Blasen durch den Blasenabscheider (20, 120, 220, 320, 420, 520, 620) abgeschieden wurden, gekühlt werden soll,
wobei der Blasenabscheider (20, 120, 220, 320, 420, 520, 620) so konfiguriert ist, dass er durch einen Abführdruck der Pumpe (100) eine Drallströmung innerhalb des Blasenabscheiders (20, 120, 220, 320, 420, 520, 620) bewirkt.

6. Kreislauf eines viskosen Fluids für ein Kraftfahrzeug nach Anspruch 5, wobei das Öl Schmieröl oder Automatikgetriebfluid ist.

## Revendications

1. Séparateur de bulles (20, 120, 220, 320, 420, 520, 620) utilisé pour un circuit de fluide pour une automobile et séparant des bulles dans un liquide, comprenant :
une partie de formation d'écoulement tourbillonnaire (22, 122, 222, 322, 422, 522, 622) qui comprend un espace interne en forme de colonne ;
une entrée d'écoulement (24, 124, 224, 324, 424, 524, 624) disposée à une extrémité de la partie de formation d'écoulement tourbillonnaire (22, 122, 222, 322, 422, 522, 622), l'entrée d'écoulement (24, 124, 224, 324, 424, 524, 624) s'ouvrant de manière à amener le liquide à s'écouler dans une direction tangentielle d'une surface périphérique interne de la partie de formation d'écoulement tourbillonnaire (22, 122, 222, 322, 422, 522, 622) pour former un écoulement tourbillonnaire sur la surface périphérique interne ;
une sortie d'écoulement (26, 126, 226, 326, 426, 526, 626) disposée à une autre extrémité de la partie de formation d'écoulement tourbillonnaire (22, 122, 222, 322, 422, 522, 622), la sortie d'écoulement (26, 126, 226, 326, 426, 526, 626) s'ouvrant de manière à amener le liquide à s'écouler dans la direction tangentielle depuis la surface périphérique interne ; et
des orifices d'évacuation de gaz (30, 130, 230, 330, 430, 530, 630, 32, 132, 232, 332, 432, 532, 632) qui évacuent le gaz séparé du liquide au niveau de la partie de formation d'écoulement tourbillonnaire (22, 122, 222, 322, 422, 522, 622) vers un extérieur de la partie de formation d'écoulement tourbillonnaire (22, 122, 222, 322, 422, 522, 622),
dans lequel les orifices d'évacuation de gaz (30, 130, 230, 330, 430, 530, 630, 32, 132, 232, 332, 432, 532, 632) sont respectivement prévus aux deux extrémités de la partie de formation d'écoulement tourbillonnaire (22, 122, 222, 322, 422, 522, 622),
dans lequel le séparateur de bulles (20, 120, 220, 320, 420, 520, 620) comprend une partie de favorisation de colonne de gaz tubulaire (28, 428) qui s'étend coaxialement avec la partie de formation d'écoulement tourbillonnaire (22, 122, 222, 322, 422, 522, 622) dans la partie de formation d'écoulement tourbillonnaire (22, 122, 222, 322, 422, 522, 622)
**caractérisé en ce que**, lorsqu'un diamètre intérieur de l'entrée d'écoulement (24, 124, 224, 324, 424, 524, 624) est d₁, un diamètre intérieur D de la partie de formation d'écoulement tourbillonnaire (22, 122, 222, 322, 422, 522, 622) varie de 1,5d₁ à 3d₁.

2. Séparateur de bulles selon la revendication 1, dans lequel une extrémité de la partie de favorisation de colonne de gaz (28, 428) pénètre à travers l'orifice d'évacuation de gaz (30, 130, 230, 330, 430, 530, 630, 32, 132, 232, 332, 432, 532, 632) sur une surface d'extrémité de la partie de formation d'écoulement tourbillonnaire (22, 122, 222, 322, 422, 522, 622).

3. Séparateur de bulles selon la revendication 1 ou 2, dans lequel lorsqu'un diamètre interne de la sortie d'écoulement (26, 126, 226, 326, 426, 526, 626) est d₂, une hauteur 1 d'une portion de la partie de favorisation de colonne de gaz (28, 428) qui fait saillie dans la partie de formation d'écoulement tourbillonnaire (22, 122, 222, 322, 422, 522, 622) est supérieure ou égale à 2d₂.

4. Séparateur de bulles selon l'une quelconque des revendications 1 à 3, dans lequel le liquide est un réfrigérant d'un refroidisseur ou d'un système de refroidissement.

5. Circuit de fluide visqueux pour une automobile, comprenant :
un carter d'huile (500, 600) ;
une pompe (100) qui distribue de l'huile du carter d'huile (500, 600) ;
un séparateur de bulles (20, 120, 220, 320, 420, 520, 620) selon l'une quelconque des revendications 1 à 3 qui sépare les bulles de l'huile distribuée par la pompe (100) ; et
un moteur (44) à refroidir par l'huile, de laquelle les bulles ont été séparées par le séparateur de bulles (20, 120, 220, 320, 420, 520, 620),
dans lequel le séparateur de bulles (20, 120, 220, 320, 420, 520, 620) est configuré pour provoquer un écoulement tourbillonnaire à l'intérieur du séparateur de bulles (20, 120, 220, 320, 420, 520, 620) par une pression d'évacuation de la pompe (100).

6. Circuit de fluide visqueux pour une automobile selon la revendication 5, dans lequel l'huile est de l'huile de lubrification ou un fluide de transmission automatique.
